# EUROPEAN PATENT APPLICATION

(11) **EP 4 741 403 A1**
(43) Date of publication of application: **13.05.2026**
(21) Application number: 25214166.8
(22) Date of filing: 07.11.2025
(51) Int. Cl.: C07F 5/02, C07B 47/00, C07B 49/00, C07B 51/00, C07B 63/02

(54) **METHOD FOR PREPARING AND PURIFYING 4-BORONO-L-PHENYLALANINE**

(30) Priority: 08.11.2024 US 202463718237 P
(71) Applicant: SCI Pharmtech, Inc., Taoyuan City 33856 (TW)
(72) Inventor: Cheng, Chien, 33856 Taoyuan City (TW); Chen, Men-En, 33856 Taoyuan City (TW)
(74) Representative: Epping - Hermann - Fischer

(57) **Abstract**

The present disclosure provides a method for 4-borono-L-phenylalanine preparation and purification including reacting 4-halo-phenylalanine with a Grignard reagent in the presence of an amidine compound or a guanidine compound without using a protecting group for the amino group of the 4-halo-phenylalanine, thereby reducing reaction step and improving yield.

## Description

### BACKGROUND

### 1. Technical Field

The present disclosure relates to a method for 4-borono-L-phenylalanine preparation and purification.

### 2. Description of Associated Art

4-Borono-L-phenylalanine is used for Boron Neutron Capture Therapy (BNCT). Many methods for 4-borono-L-phenylalanine preparation are currently known, such as those disclosed in U.S. Patent No. US8765997B2 and U.S. Patent Application Publication No. US2023416280A1.

US8765997B2 discloses a reaction between an N-protected 4-iodo-phenylalanine and an n-butyl lithium to form a phenyl carbanion, and then the intermediate compound attacks a boron ester to form a precursor of 4-borono-L-phenylalanine.

US2023416280A1 also describes a method where a N-protected 4-iodo-phenylalanine reacts with an isopropylmagnesium chloride-lithium chloride complex (i-PrMgC1.LiCl, also known as a "turbo Grignard reagent") to form a phenyl carbanion. The intermediate compound then attacks a boron ester to form a precursor of 4-borono-L-phenylalanine.

It is clear that the current methods for preparing 4-borono-L-phenylalanine in the art involve initiating the reaction with at least one starting material that has protecting group for an amino group. Such protecting group needs to be removed after the initial reaction to produce the target compound 4-borono-L-phenylalanine, thus lengthening reaction time and lowering yield.

Further, there is a general need to improve the efficiency or input molar ratio of any reaction method. In the case of the preparation of 4-borono-L-phenylalanine, the reaction efficiency of boronating agents such as aforementioned boron ester is of particular interest as the boronating agents normally are the most expensive ingredient involved in the preparation of 4-borono-L-phenylalanine. For example, US8765997B2 discloses performing the reaction at a molar equivalent of the boronating agent to the N-protected 4-iodo-phenylalanine of over 3, and it is preferable to further decrease the molar ratio.

In conclusion, there is an issue needed to be solved urgently in the art to provide a method for 4-borono-L-phenylalanine preparation and purification that reduces reaction steps, improves reaction efficiency and maximizes yield.

### SUMMARY

Given the disadvantages of the prior art described above, the present disclosure provides a method for preparing 4-borono-L-phenylalanine that does not require a starting material having a protecting group, and thus omitting the deprotection process. For the purpose above, the present disclosure provides a method for 4-borono-L-phenylalanine preparation comprises steps of a) reacting 4-halo-phenylalanine with a Grignard reagent in the presence of an organic base to form a reaction mixture; and b) reacting the reaction mixture obtained from step a) with a boronating agent.

In one embodiment of the method of the present disclosure, the halogen of 4-halo-phenylalanin is fluorine (F), chlorine (Cl), bromine (Br), or iodine (I).

In one embodiment of the method of the present disclosure, the 4-halo-phenylalanin is 4-iodo-phenylalanine.

In one embodiment of the method of the present disclosure, the Grignard reagent is a C₁-C₁₅ linear or branched alkylmagnesium halide.

In one embodiment of the method of the present disclosure, the alkylmagnesium halide is isopropylmagnesium chloride, sec-butylmagnesium chloride, or trimethylsilylmethylmagnesium chloride.

In one embodiment of the method of the present disclosure, the Grignard reagent is further combined with a metal halide to form a mixture.

In one embodiment of the method of the present disclosure, the metal halide is lithium chloride.

In one embodiment of the method of the present disclosure, the mixture of the Grignard reagent and the metal halide is a turbo Grignard reagent.

In one embodiment of the method of the present disclosure, the turbo Grignard reagent is an isopropylmagnesium chloride-lithium chloride complex (i-PrMgCl.LiCl).

In one embodiment of the method of the present disclosure, the organic base is an amidine compound or a guanidine compound.

In one embodiment of the method of the present disclosure, the amidine compound is represented by formula (I): 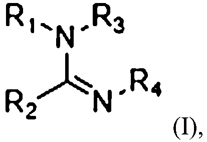
wherein each of R₁ to R₄ is independently selected from the group consisting of H, a substituted or unsubstituted C₁-C₂₀ alkyl group, and a substituted or unsubstituted C₁-C₂₀ cycloalkyl group, or
any two of the R₁ to R₄ are not H and are linked to each other to form a substituted or unsubstituted ring.

In one embodiment of the method of the present disclosure, the amidine compound is 1,8-diazabicyclo[5.4.0]undec-7-ene (DBU), 1,5-diazabicyclo[4.3.0]non-5-ene (DBN), diminazene, benzamidine, pentamidine, paranyline, or any combination thereof.

In one embodiment of the method of the present disclosure, the guanidine compound is represented by formula (II): 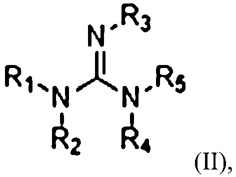
wherein each of R₁ to R₅ is independently selected from the group consisting of H, a substituted or unsubstituted C₁-C₂₀ alkyl group, and a substituted or unsubstituted C₁-C₂₀ cycloalkyl group, or
any two of the R₁ to R₅ are not H and are linked to each other to form a substituted or unsubstituted ring.

In one embodiment of the method of the present disclosure, the guanidine compoun is 1,1,3,3-tetramethylguanidine (TMG), 2-tert-Butyl-1,1,3,3-tetramethylguanidine (Barton's base), 7-methyl-1,5,7-triazabicyclo[4.4.0]dec-5-ene (MTBD), 1,5,7-triazabicyclo[4.4.0]dec-5-ene (TBD), or any combination thereof.

In one embodiment of the method of the present disclosure, the reaction in the step a) is performed at a temperature ranging from -30°C to 10°C.

In one embodiment of the method of the present disclosure, the reaction in the step a) is performed at a molar equivalent of the Grignard reagent to the 4-halo-phenylalanine is at least 4.0 and a molar equivalent of the organic base to the 4-halo-phenylalanine is at least 1.0.

In one embodiment of the method of the present disclosure, the boronating agent is a boric acid ester or a boric acid amide.

In one embodiment of the method of the present disclosure, the boric acid ester is a triethyl borate or a tributyl borate.

In one embodiment of the method of the present disclosure, the reaction in the step b) is performed at a temperature ranging from -50°C to 10°C.

In one embodiment of the method of the present disclosure, the reaction in the step b) is performed at a molar equivalent of the boronating agent to the 4-halo-phenylalanine is at least 0.9.

In one embodiment of the method of the present disclosure, the method for 4-borono-L-phenylalanine preparation further comprises a step of c) quenching the reaction of step b) with an acid solution.

In one embodiment of the method of the present disclosure, the acid solution is a strong acid solution. In another embodiment of the method of the present disclosure, the acid solution is hydrogen chloride or acetic acid solution.

In one embodiment of the method of the present disclosure, the acid solution has a concentration ranging from 1M to 6M, and the quenching reaction of step c) is performed at a temperature ranging from 5°C to 25°C.

The present disclosure also provides a method for purifying 4-borono-L-phenylalanine comprising purifying the 4-borono-L-phenylalanine obtained from the preparing method of the present disclosure using a reversed-phase column.

Accordingly, the method of the present disclosure allows the use of a starting material that is without a protecting group for an amino group in the preparation of 4-borono-L-phenylalanine, thereby reducing reaction step and improving yield.

### DETAILED DESCRIPTION OF THE PREFERRED EMBODIMENTS

The following examples are used for illustrating the present disclosure. A person skilled in the art can easily conceive the other advantages and effects of the present disclosure, based on the disclosure of the specification. The present disclosure can also be implemented or applied as described in different examples. It is possible to modify or alter the following examples for carrying out this disclosure without contravening its scope, for different aspects and applications.

It is further noted that, as used in this disclosure, the singular forms "a," "an," and "the" include plural referents, unless expressly and unequivocally limited to one referent. The term "or" is used interchangeably with the term "and/or," unless the context clearly indicates otherwise.

As used herein, the terms "comprising," "comprises," "including" or "includes" are used in reference to compositions, methods, and respective component(s) thereof, which are included in the present disclosure, yet open to the inclusion of unspecified elements.

The present disclosure provides a method for 4-borono-L-phenylalanine preparation comprises steps of a) reacting 4-halo-phenylalanine with a Grignard reagent in the presence of an organic base to form a reaction mixture; and b) reacting the reaction mixture obtained from step a) with a boronating agent.

The preparation of 4-borono-L-phenylalanine involves amino acid phenylalanine which has nucleophilic amino (-NH₂) and carboxylic acid (-COOH) functional groups, wherein the amino group is especially nucleophilic. Accordingly, at least the amino group of the phenylalanine needs to be protected during a nucleophilic reaction to avoid off-target reactions. As such, conventional methods of preparing of 4-borono-L-phenylalanine always utilize an N-protected phenylalanine as the starting material.

However, the present disclosure surprisingly discovers that the presence of an organic base great reduces boronating agent off-target reaction with amino group of the phenylalanine. Without being bound by theory, the organic base is likely to form a complex with phenylalanine, and thus decreased the nucleophilicity of the amino group of the phenylalanine and/or prevent boronating agent from interacting with the amino group of the phenylalanine. As a result, phenylalanine without a protecting group for an amino group can be used as the starting material for the preparation of 4-borono-L-phenylalanine.

In one embodiment of the method of the present disclosure, the halogen of 4-halo-phenylalanin is fluorine (F), chlorine (Cl), bromine (Br), or iodine (I).

In one embodiment of the method of the present disclosure, the 4-halo-phenylalanin is 4-iodo-phenylalanine.

In one embodiment, the Grignard reagent is a class of compounds represented by the formula RMgX, where X is a halide; and R is an organic group such as C₁-C₃₁ alkyl, C₁-C₃₁ cycloalkyl or aryl. Non limiting examples of Grignard reagent is methylmagnesium chloride and phenylmagnesium bromide.

In one embodiment of the method of the present disclosure, the Grignard reagent is a C₁-C₁₅ linear or branched alkylmagnesium halide, for example, but not limited to, isopropylmagnesium chloride (i-PrMgCl), sec-butylmagnesium chloride and trimethylsilylmethylmagnesium chloride.

In one embodiment of the method of the present disclosure, the Grignard reagent is further combined with a metal halide to form a mixture.

In one embodiment of the method of the present disclosure, the metal halide is lithium chloride.

In one embodiment of the method of the present disclosure, the mixture of the Grignard reagent and the metal halide is a turbo Grignard reagent.

In one embodiment, a range of the number of carbon atoms of the present disclosure can extend from a lower limit to an upper limit, for example, C₁-C₃₁ refers to a number of the carbon atom(s) of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30 or 31.

In one embodiment, the turbo Grignard reagent is an isopropylmagnesium chloride-lithium chloride complex (i-PrMgCl.LiCl).

Other examples of Grignard reagent are well known in the art and a person skilled in the art can readily choose suitable Grignard reagent as needed.

In one embodiment of the method of the present disclosure, the organic base is an amidine compound or a guanidine compound.

In one embodiment, the amidine compound is represented by formula (I): 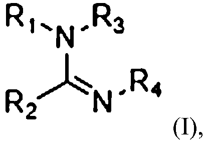
wherein each of R₁ to R₄ is independently selected from the group consisting of H, a substituted or unsubstituted C₁-C₂₀ alkyl group, and a substituted or unsubstituted C₁-C₂₀ cycloalkyl group, or
any two of the R₁ to R₄ are not H and are linked to each other to form a substituted or unsubstituted ring.

In one embodiment, the guanidine compound is represented by formula (II): 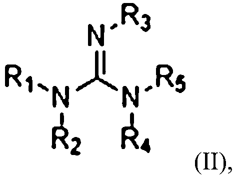
wherein each of R₁ to R₅ is independently selected from the group consisting of H, a substituted or unsubstituted C₁-C₂₀ alkyl group, and a substituted or unsubstituted C₁-C₂₀ cycloalkyl group, or
any two of the R₁ to R₅ are not H and are linked to each other to form a substituted or unsubstituted ring.

In one embodiment, the substituent is selected from an alkoxy group, an azo group, an amino group and any combination thereof.

In one embodiment, the substituted or unsubstituted ring is a 3-10 membered ring.

In one embodiment, the amidine compound includes, but is not limited to, 1,8-diazabicyclo[5.4.0]undec-7-ene (DBU), 1,5-diazabicyclo[4.3.0]non-5-ene (DBN), diminazene, benzamidine, pentamidine, paranyline, or any combination thereof.

In one embodiment, the guanidine compound includes, but is not limited to, 1,1,3,3-tetramethylguanidine (TMG), 2-tert-Butyl-1,1,3,3-tetramethylguanidine (Barton's base), 7-methyl-1,5,7-triazabicyclo[4.4.0]dec-5-ene (MTBD), 1,5,7-triazabicyclo[4.4.0]dec-5-ene (TBD), or any combination thereof.

In one embodiment of the method of the present disclosure, the reaction in the step a) is performed at a temperature ranging from -30°C to 10°C, at a molar equivalent of the Grignard reagent to the 4-halo-phenylalanine is at least 4.0 and a molar equivalent of the organic base to the 4-halo-phenylalanine is at least 1.0.

In one embodiment, the reaction in the step a) is performed at a temperature ranging from -30°C, -25°C, -20°C, -15°C, -10°C, -5°C, 0°C, 5°C, 10°C, or in a range between any two of these values.

In one embodiment, the reaction in the step a) is performed at a molar equivalent of the Grignard reagent to the 4-halo-phenylalanine is 4.0, 4.5, 5.0, 5.5, 6.0, 6.5, 7.0, 7.5, 8.0, 8.5, 9.0, 9.5, 10.0, or in a range between any two of these values.

In one embodiment, the reaction in the step a) is performed at a molar equivalent of the organic base to the 4-halo-phenylalanine is 1.0, 1.5, 2.0, 2.5, 3.0, 3.5, 4.0, 4.5, 5.0, 5.5, 6.0, 6.5, 7.0, 7.5, 8.0, 8.5, 9.0, 9.5, 10.0, or in a range between any two of these values.

In one embodiment, the reaction in the step a) is allowed to react for 10 minutes to 12 hours, such as 10, 20, 30, 40, or 50 minutes, 1, 1.5, 2, 2.5, 3, 3.5, 4, 4.5, 5, 6, 7, 8, 9, 10, 11, or 12 hours, or in a range between any two of these values.

In one embodiment, the boronating agent is a boric acid ester or a boric acid amide.

In one embodiment, the boric acid ester is a trialky borate, such as a triethyl borate or a tributyl borate.

In one embodiment, the reaction in the step b) is performed at a temperature ranging from -50°C to 10°C, at a molar equivalent of the boronating agent to the 4-halo-phenylalanine is at least 0.9.

In one embodiment, the reaction in the step b) is performed at a temperature ranging from -50°C, -45°C, -40°C, -35°C, -30°C, -25°C, -20°C, -15°C, -10°C, -5°C, 0°C, 5°C, 10°C, or in a range between any two of these values.

In one embodiment, the reaction in the step b) is performed at a molar equivalent of the boronating agent to the 4-halo-phenylalanine is 0.9, 1.0, 1.1, 1.2, 1.3, 1.4, 1.5, 2.0, 2.5, 3.0, 3.5, 4.0, 4.5, 5.0, or in a range between any two of these values.

In one embodiment, the reaction in the step b) is allowed to react for 5 minutes to 24 hours, such as 5, 10, 15, 20, 25, 30, 35, 40, 45, 50, or 55 minutes, 1, 1.5, 2, 2.5, 3, 3.5, 4, 4.5, 5, 6, 7, 8, 9, 10, 11, 12, 13, 14, 15, 16, 17, 18, 19, 20, 21, 22, 23, or 24 hours, or in a range between any two of these values.

In one embodiment of the method of the present disclosure, the method for 4-borono-L-phenylalanine preparation further comprises a step of c) quenching the reaction of step b) with an acid solution.

In one embodiment of the method of the present disclosure, the acid solution is acetic acid solution.

In one embodiment of the method of the present disclosure, the acid solution is an strong acid solution such as hydrogen chloride aqueous solution, i.e., HCl (aq.) solution.

In one embodiment of the method of the present disclosure, the hydrogen chloride aqueous solution has a concentration ranging from 1M to 6 M, and the quenching reaction of step c) is performed at a temperature ranging from 5°C to 25°C.

In one embodiment, the concentration of hydrogen chloride aqueous solution is 1.0M, 1.5M, 2.0M, 2.5M, 3.0M, 3.5M, 4.0M, 4.5M, 5.0M, 5.5M, 6.0M, or in a range between any two of these values.

In one embodiment, the quenching reaction of step c) is performed at a temperature ranging from 5°C, 10°C, 15°C, 20°C, 25°C, or in a range between any two of these values.

The present disclosure also provides a method for purifying 4-borono-L-phenylalanine comprising purifying the 4-borono-L-phenylalanine obtained from the preparing method of the present disclosure using a reversed-phase column.

As used herein, the term "reversed-phase column" refers to a column with a non-polar stationary phase and is used with a polar mobile phase. Non-limiting examples of the reversed-phase column are reversed phase C18 column such as Acclaim^{™} 120 C18 Column and column containing SEPABEADS^{™} SP850 Resin. In the context of the present disclosure, column containing activated carbon is also considered as a reversed-phase column.

As used herein, the term "Bed" refers to the volume of elute against the amount of chromatography resin used. For example, the collection of 100mL elute through 100mL resin is defined as 1 Bed. Accordingly, the chromatography flow rate can be defined as specific Bed / hour.

Boron naturally occurs as isotopes ¹⁰B and ¹¹B. The present disclosure utilizes both compounds containing nature boron as well as compounds containing essentially only ¹⁰B, i.e., boron with 5 neutrons, in the preparation of 4-borono-L-phenylalanine for demonstrative purposes. The terms "¹⁰B" is used to indicate the compounds containing essentially only boron isotope ¹⁰B.

The present disclosure indicates that an unprotected starting material such as 4-halo-phenylalanine can react with a Grignard reagent in the presence of an amidine compound or a guanidine compound to from an intermediate material having a carbanion group, and then react with boron ester to obtain 4-borono-L-phenylalanine.

### EXAMPLES

Various properties and efficacies will be illustrated by Examples below. The Examples set forth are used to illustrate the properties of the present disclosure which is not limited to those illustrated in the particular examples.

### Materials and Reagents

4-I-L-phenylalanine, Combi-Blocks
THF, MACRON
DBU, MACKLIN
DBN, Angene
Barton's base, Angene
MTBD, Angene
1.3M iPrMgCl.LiCl in THF, Aladdin
2.0M iPrMgCl in THF, Acros
tributyl borate, TCI
triethyl borate, TCI
SEPABEADS^{™} SP850 Resin, Mitsubishi chemical group
NaOH, Honeywell
HCl, ALL-IN-LINE-CHEMICALS
Na₂CO₃, nature's workshop
boric acid-¹⁰B, aladdin
1-butanol, kanto chemical
toluene, J.T.baker
Other materials and reagents are purchased from Sigma-Aldrich or other equivalent supplier.

### Synthesis of tributyl borate-¹⁰B (RD202414-250205)

Tributyl borate containing isotope ¹⁰B (i.e., tributyl borate-¹⁰B) is synthesis using conventional means. Briefly, setting up the Dean-Stark trap and condenser. Charge boric acid-¹⁰B (21.4g, 0.35mol), 1-butanol (80.4g, 1.09mol) and toluene (35g) into the 250 mL reactor, heated to reflux for 0.5 hours, and then distilled to trap the water. After removing the water and completing the reaction, the remaining residue in the reactor was vacuum distilled to obtain 58.2g (yield 72.5%) of tributyl borate-¹⁰B as clear liquid, which was 99.0% pure determined by GC.

### Example 1 (RD202414-250404)

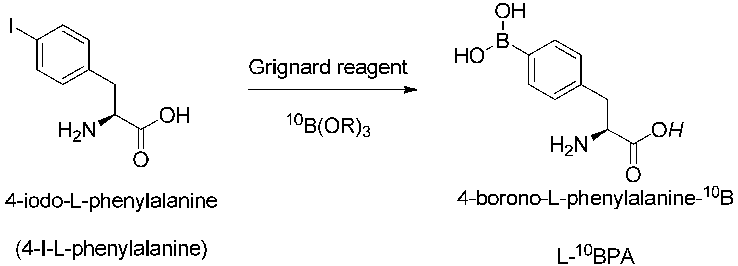

An amount of 29.1g of 4-iodo-L-phenylalanine (4-I-L-phenylalanine; 0.1 mol) was added to 100g of tetrahydrofuran (THF) under inert nitrogen atmosphere at 25°C. Then, 45.6g of 1,8-diazabicyclo[5.4.0]undec-7-ene (DBU; 0.3 mol) was charged dropwise to the THF solution of 4-iodo-L-phenylalanine to obtain a solution mixture.

The 295.0g of i-PrMgCl.LiCl solution (1.3M in THF, 0.4 mol) was charged into the primary reactor and cooled to -5°C to 5°C, and the solution mixture was charged dropwise into the primary reactor to start the reaction. After 0.5 hours, the primary reactor was cooled to -40°C to -30°C, then tributyl borate-¹⁰B 23.0g (0.1 mol) was charged into reaction mixture and allowed to further react for 2 hours to obtain an intermediate mixture.

The 10% HCl (aq.) solution 256.0g was charged into the secondary reactor and cooled to 5°C, the intermediate mixture was transfer dropwise into the secondary reactor to quench the reaction. The pH was adjusted to the isoelectric point to precipitate the product. Filter the mixture to obtain 13.1g (yield 62.9%) of crude 4-borono-L-phenylalanine as pale-yellow solid, which was 98.1% pure determined by UPLC. ¹H NMR (600 MHz, D₂O, CF₃COOH): δ 7.68 (d. J=8.0 Hz, 2H), 7.28 (d. J=8.0 Hz, 2H), 4.29 (dd, J=7.7, 5.7 Hz, 1H), 3.30 (dd, J=14.6, 5.7 Hz, 1H), 3.17 (dd, J=14.6, 7.7 Hz, 1H); MS (ESI): calculated for C₉H₁₃¹⁰BNO₄, [M+H]⁺ 209.09; found 209.56.

### Example 2 (RD202414-250507)

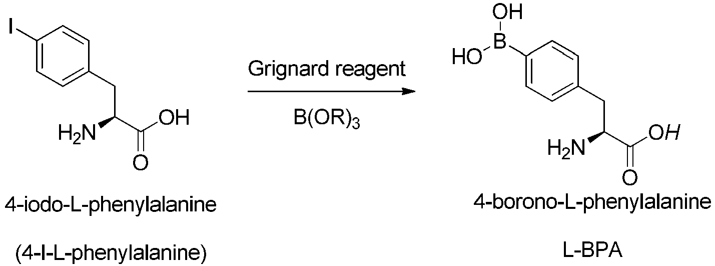

An amount of 29.1g of 4-iodo-L-phenylalanine (4-I-L-phenylalanine; 0.1 mol) was added to 99.8g of tetrahydrofuran (THF) under inert nitrogen atmosphere at 25°C. Then, 45.6g of 1,8-diazabicyclo[5.4.0]undec-7-ene (DBU; 0.3 mol) was charged dropwise to the THF solution of 4-iodo-L-phenylalanine to obtain a solution mixture.

The 292.0g of i-PrMgCl.LiCl solution (1.3M in THF, 0.4 mol) was charged into the primary reactor and cooled to -5°C to 5°C, and the solution mixture was charged dropwise into the primary reactor to start the reaction. After 0.5 hours, the primary reactor was cooled to -45°C to -35°C, then tributyl borate 23.0g (0.1 mol) was charged into reaction mixture and allowed to further react for 2 hours to obtain an intermediate mixture.

The 10% HCl (aq.) solution 248.0g was charged into the secondary reactor and cooled to 5°C to 10°C, the intermediate mixture was transfer dropwise into the secondary reactor to quench the reaction. The pH was adjusted to the isoelectric point to precipitate the product. Filter the mixture to obtain 13.1g (yield 62.6%) of crude 4-borono-L-phenylalanine as pale-yellow solid, which was 96.9% pure determined by UPLC. ¹H NMR (600 MHz, D₂O, CF₃COOH): δ 7.68 (d. J=8.0 Hz, 2H), 7.28 (d. J=8.0 Hz, 2H), 4.29 (dd, J=7.7, 5.7 Hz, 1H), 3.30 (dd, J=14.6, 5.7 Hz, 1H), 3.17 (dd, J=14.6, 7.7 Hz, 1H); MS (ESI): calculated for C₉H₁₃BNO₄, [M+H]⁺ 210.09; found 210.56.

A comparison between Example 1 and Example 2 above indicated that the reactions involving ¹⁰B isotope boronating agent and nature boronating agent were interchangeable. In other words, there was no observable difference when the method of the present disclosure adopted either ¹⁰B isotope or nature boron in the preparation of 4-borono-L-phenylalanine.

### Example 3 (RD202414-250607)

An amount of 8.7g of 4-iodo-L-phenylalanine (4-I-L-phenylalanine; 0.03 mol) was added to 30g of tetrahydrofuran (THF) under inert nitrogen atmosphere at 25°C. Then, 14.0g of 1,8-diazabicyclo[5.4.0]undec-7-ene (DBU; 0.09 mol) was charged dropwise to the THF solution of 4-iodo-L-phenylalanine to obtain a solution mixture.

The 60.0g of i-PrMgCl solution (2.0M in THF, 0.12 mol) was charged into the primary reactor and cooled to -5°C to 5°C, and the solution mixture was charged dropwise into the primary reactor to start the reaction. After 0.5 hours, the primary reactor was cooled to -45°C to -30°C, then tributyl borate 6.9g (0.03 mol) was charged into reaction mixture and allowed to further react for 2 hours to obtain an intermediate mixture.

The 10% HCl (aq.) solution 83.0g was charged into the secondary reactor and cooled to 5°C to 10°C, the intermediate mixture was transfer dropwise into the secondary reactor to quench the reaction. The pH was adjusted to the isoelectric point to precipitate the product. Filter the mixture to obtain 2.7g (yield 43.8%) of crude 4-borono-L-phenylalanine as pale-yellow solid, which was 96.3% pure determined by UPLC. ¹H NMR (600 MHz, D₂O, CF₃COOH): δ 7.68 (d. J=8.0 Hz, 2H), 7.28 (d. J=8.0 Hz, 2H), 4.29 (dd, J=7.7, 5.8 Hz, 1H), 3.30 (dd, J=14.6, 5.7 Hz, 1H), 3.17 (dd, J=14.6, 7.7 Hz, 1H); MS (ESI): calculated for C₉H₁₃BNO₄, [M+H]⁺ 210.09; found 210.54.

### Example 4 (RD202414-7250609)

An amount of 8.7g of 4-iodo-L-phenylalanine (4-1-L-phenylalanine; 0.03 mol) was added to of 30g tetrahydrofuran (THF) under inert nitrogen atmosphere at 25°C. Then, 15.4g of 2-tert-Butyl-1,1,3,3-tetramethylguanidine (barton's base; 0.09 mol) was charged dropwise to the THF solution of 4-iodo-L-phenylalanine to obtain a solution mixture.

The 100.5g of i-PrMgCl.LiCl solution (1.3M in THF, 0.12 mol) was charged into the primary reactor and cooled to -5°C to 5°C, and the solution mixture was charged dropwise into the primary reactor to start the reaction. After 0.5 hours, the primary reactor was cooled to -40°C to -30°C, then tributyl borate 6.9g (0.03 mol) was charged into reaction mixture and allowed to further react for 2 hours to obtain an intermediate mixture.

The 10% HCl (aq.) solution 83.0g was charged into the secondary reactor and cooled to 5°C to 10°C, the intermediate mixture was transfer dropwise into the secondary reactor to quench the reaction. The pH was adjusted to the isoelectric point to precipitate the product. Filter the mixture to obtain 2.0g (yield 32.3%) of crude 4-borono-L-phenylalanine as pale-yellow solid, which was 94.0% pure determined by UPLC. ¹H NMR (600 MHz, D₂O, CF₃COOH): δ 7.68 (d. J=8.0 Hz, 2H), 7.28 (d. J=8.0 Hz, 2H), 4.29 (dd, J=7.7, 5.8 Hz, 1H), 3.30 (dd, J=14.6, 5.7 Hz, 1H), 3.17 (dd, J=14.6, 7.7 Hz, 1H); MS (ESI): calculated for C₉H₁₃BNO₄, [M+H]⁺ 210.09; found 210.50.

### Example 5 (RD202414-250615)

An amount of 8.7g of 4-iodo-L-phenylalanine (4-I-L-phenylalanine; 0.03 mol) was added to 30.0g of tetrahydrofuran (THF) under inert nitrogen atmosphere at 25°C. Then, 11.3g of 1,5-diazabicyclo(4.3.0)non-5-ene (DBN; 0.09 mol) was charged dropwise to the THF solution of 4-iodo-L-phenylalanine to obtain a solution mixture.

The 96.8g of i-PrMgCl.LiCl solution (1.3M in THF, 0.12 mol) was charged into the primary reactor and cooled to -5°C to 10°C, and the solution mixture was charged dropwise into the primary reactor to start the reaction. After 0.5 hours, the primary reactor was cooled to -45°C to -30°C, then tributyl borate 6.9g (0.03 mol) was charged into reaction mixture and allowed to further react for 2 hours to obtain an intermediate mixture.

The 10% HCl (aq.) solution 83.0g was charged into the secondary reactor and cooled to 5°C to 10°C, the intermediate mixture was transfer dropwise into the secondary reactor to quench the reaction. The pH was adjusted to the isoelectric point to precipitate the product. Filter the mixture to obtain 3.5g (yield 55.9%) of crude 4-borono-L-phenylalanine as pale-yellow solid, which was 96.7% pure determined by UPLC. ¹H NMR (600 MHz, D₂O, CF₃COOH): δ 7.68 (d. J=8.0 Hz, 2H), 7.28 (d. J=8.0 Hz, 2H), 4.30 (dd, J=7.7, 5.8 Hz, 1H), 3.30 (dd, J=14.6, 5.8 Hz, 1H), 3.17 (dd, J=14.6, 7.7 Hz, 1H); MS (ESI): calculated for C₉H₁₃BNO₄, [M+H]⁺ 210.09; found 210.53.

### Example 6 (RD202414-250618)

An amount of 4.4g of 4-iodo-L-phenylalanine (4-1-L-phenylalanine; 0.015 mol) was added to 15g of tetrahydrofuran (THF) under inert nitrogen atmosphere at 25°C. Then, 6.91g of 7-methyl-1,5,7-triazabicyclo(4.4.0)dec-5-ene (MTBD; 0.045 mol) was charged dropwise to the THF solution of 4-iodo-L-phenylalanine to obtain a solution mixture.

The 48.9g of i-PrMgCl.LiCl solution (1.3M in THF, 0.06 mol) was charged into the primary reactor and cooled to -10°C to 5°C, and the solution mixture was charged dropwise into the primary reactor to start the reaction. After 0.5 hours, the primary reactor was cooled to -40°C to -30°C, then tributyl borate 3.4g (0.015 mol) was charged into reaction mixture and allowed to further react for 2 hours to obtain an intermediate mixture.

The 10% HCl (aq.) solution 42.0g was charged into the secondary reactor and cooled to 5°C to 10°C, the intermediate mixture was transfer dropwise into the secondary reactor to quench the reaction. The pH was adjusted to the isoelectric point to precipitate the product. Filter the mixture to obtain 1.1g (yield 33.8%) of crude 4-borono-L-phenylalanine as pale-yellow solid, which was 95.2% pure determined by UPLC. NMR (600 MHz, D₂O, CF₃COOH): δ 7.68 (d. J=8.1 Hz, 2H), 7.28 (d. J=8.0 Hz, 2H), 4.29 (dd, J=7.7, 5.7 Hz, 1H), 3.30 (dd, J=14.6, 5.8 Hz, 1H), 3.17 (dd, J=14.6, 7.7 Hz, 1H); MS (ESI): calculated for C₉H₁₃BNO₄, [M+H]⁺ 210.09; found 210.53.

### Example 7 (RD202414-240812)

An amount of 8.7g of 4-iodo-L-phenylalanine (4-1-L-phenylalanine; 0.03 mol) was added to 30g of tetrahydrofuran (THF) under inert nitrogen atmosphere at 25°C. Then, 6.8g of 1,8-diazabicyclo[5.4.0]undec-7-ene (DBU; 0.045 mol) was charged dropwise to the THF solution of 4-iodo-L-phenylalanine to obtain a solution mixture.

The 97.4g of i-PrMgCl.LiCl solution (1.3M in THF, 0.06 mol) was charged into the primary reactor and cooled to -10°C to 10°C, and the solution mixture was charged dropwise into the primary reactor to start the reaction. After 0.5 hours, the primary reactor was cooled to -40°C to -30°C, then tributyl borate-¹⁰B 6.9g (0.03 mol) was charged into reaction mixture and allowed to further react for 2 hours to obtain an intermediate mixture.

The 10% HCl (aq.) solution 66.0g was charged into the secondary reactor and cooled to 5°C to 10°C, the intermediate mixture was transfer dropwise into the secondary reactor to quench the reaction. The pH was adjusted to the isoelectric point to precipitate the product. Filter the mixture to obtain 4.1g (yield 65.4%) of crude 4-borono-L-phenylalanine-¹⁰B as pale-yellow solid, which was 98.7% pure determined by UPLC. ¹H NMR (600 MHz, D₂O, CF₃COOH): δ 7.68 (d. J=8.1 Hz, 2H), 7.28 (d. J=8.0 Hz, 2H), 4.30 (dd, J=7.7, 5.8 Hz, 1H), 3.30 (dd, J=14.6, 5.8 Hz, 1H), 3.17 (dd, J=14.6, 7.7 Hz, 1H); MS (ESI): calculated for C₉H₁₃¹⁰BNO₄, [M+H]⁺ 209.09; found 209.49.

### Example 8 (RD202414-240922)

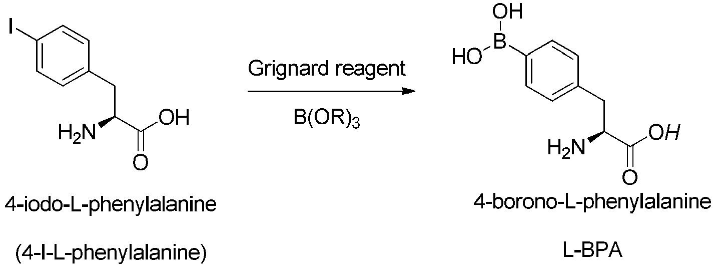

An amount of 0.58g of 4-iodo-L-phenylalanine (4-I-L-phenylalanine; 2mmol) was added to 5.0g of tetrahydrofuran (THF) under inert nitrogen atmosphere at 25°C. Then, 0.94g of 1,8-diazabicyclo[5.4.0]undec-7-ene (DBU; 6.15 mmol) was charged dropwise to the THF solution of 4-iodo-L-phenylalanine to obtain a solution mixture.

The solution mixture was cooled to -30°C, and i-PrMgCl.LiCl solution (1.3M in THF) 7.7mL (10 mmol) was charged dropwise into the solution mixture to start the reaction. After 1.5 hours, triethyl borate 0.32g (2.2mmol) was charged into reaction mixture and allowed to further react for 20 minutes. A sample of the reaction mixture was examined using UPLC and 4-borono-L-phenylalanine (BPA) was identified. The UPLC result was shown in Table 1 below.

**Table 1**

| **UPLC** 220 nm (Area %) | |
|---|---|
| Rt.2.44 (4-borono-L-phenylalanine) | 74.9 (Assay yield 71.7%) |
| Rt.2.96 (L-phenylalanine) | Not Applicable |
| Rt.3.55 (4-iodo-L-phenylalanine) | 7.3 (Assay yield 3.8%) |
| Rt.3.88 (2,4-diiodo-L-phenylalanine) | Not Detectable |

The reaction mixture was warmed back to the 25°C, then 1M acetic acid was charged to the reaction mixture to adjust the pH to 7, thereby quenching the reaction.

The pH adjusted reaction mixture was subjected to vacuum concentration, and extracted by water and ethyl acetate solution. The aqueous phase, where the target product reside, was collected.

The pH of the collected aqueous phase was adjusted to the isoelectric point to precipitate the product. The precipitation was then filtrated and vacuum dried. A total of 0.15g (0.7mmol, 35% yield) 4-borono-L-phenylalanine product was isolated.

### Example 9 (RD202414-240927)

An amount of 0.58g of 4-iodo-L-phenylalanine (4-I-L-phenylalanine; 2mmol) was added to 5g of tetrahydrofuran (THF) under inert nitrogen atmosphere at 25°C. Then, 0.94g of 1,8-diazabicyclo[5.4.0]undec-7-ene (DBU; 6.15 mmol) was charged dropwise to the THF solution of 4-iodo-L-phenylalanine to obtain a solution mixture.

The i-PrMgCl.LiCl solution (1.3M in THF) 6.2mL (8 mmol) was charged into the reactor and cooled to -10°C, solution mixture was charged dropwise into the reactor to start the reaction. After 2 hours, tributyl borate 0.66g (2.2mmol) was charged into reaction mixture and allowed to further react for 24 hours. A sample of the reaction mixture was examined using UPLC and 4-borono-L-phenylalanine (BPA) was identified. The UPLC result was shown in Table 2 below.

**Table 2**

| **UPLC** 220 nm (Area %) | |
|---|---|
| Rt.2.44 (4-borono-L-phenylalanine) | 86.8 (Assay yield 89.0%) |
| Rt.2.96 (L-phenylalanine) | Not Applicable |
| Rt.3.55 (4-iodo-L-phenylalanine) | 3.0 (Assay yield 1.1%) |
| Rt.3.88 (2,4-diiodo-L-phenylalanine) | Not Detectable |

### Example 10

Amino acids are typical purified using an ion exchange resin following the absorption, washing, and elution procedure. Briefly, a crude solution containing amino acids is passed through a column packed with ion exchange resin, where the amino acids bind to the charged functional groups on the resin. The column is then washed to remove any impurities and unbound molecules that did not bind to the resin. Next, an eluent is passed through the column to release the amino acids from the resin, allowing the purified amino acids to flow out of the column and be collected.

Accordingly, various combinations of Relite^{™} JA310 (weakly basic anion resin), Diaion^{™} CRB05 (boron chelating resin), Diaion^{™} SK1B (strongly acidic cation resin), Relite^{™} WK60L (weakly acidic cation resin), and SEPABEADS^{™} SP850 (non-polar resin) were explored to find the best method for purifying the 4-borono-L-phenylalanine crude produce by the method for 4-borono-L-phenylalanine preparation of the present disclosure. The purification results were shown in Table 3 below.

Specifically, 4-borono-L-phenylalanine crudes batch number RD202414-241220, RD202414-240204 and RD202414-240604 was produced following the steps describe in Example 2 (RD202414-250507), except that the amount of 4-iodo-L-phenylalanine (4-1-L-PA), tributyl borate (B(OBu)₃), tetrahydrofuran (THF), 1,8-diazabicyclo[5.4.0]undec-7-ene (DBU) and i-PrMgCl.LiCl reagents were adjusted as described in Table 3. These crudes were then separated into organic phase (ORG) and aquatic phase (AQ), and each phase was collected and concentrated for purification using different column combinations.

Inputs and outputs of each purification step were examined using UPLC (223 nm), and recovery rate of different chemicals, including 4-borono-L-phenylalanine (BPA) as well as impurities L-phenylalanine (Phe), DBU and 4-iodo-L-phenylalanine (4-I-L-PA) after each purification step was calculated. The recovery rate may exceed 100% due to quantification differences before and after the purification step.

**Table 3**

| Batch No. | **RD202414-241220** | **RD202414-240204** | **RD202414-240604** |
|---|---|---|---|
| **4-I-L-PA** (g/mmole/eq.) | 2.33/8/1 | 7.28/25/1 | 8.73/30/1 |
| **B(OBu**)₃(g/mmole/eq.) | 1.66/7.2/0.9 | 11.5/50/2 | 6.9/30/1 |
| **THF** (g) | 8 | 25 | 30 |
| **DBU** (g/mmole/eq.) | 3.65/24/3 | 11.42/75/3 | 13.7/90/3 |
| **i-PrMgCl.LiCl** (g/mmole/eq.) | 23.2/32/4 | 74.1/100/4 | 98.4/120/4 |
| column combination comparison | **JA310 (anion removal)** | **JA310 (anion removal)** | |
| | **CRB05 (BPA adsorption)** | **SK1B (DBU removal)** | **WK60L (cation removal)** |
| | **SP850 (impurity removal)** | **SP850 (impurity removal)** | **SP850 (impurity removal)** |
| **First stage** | AQ concentrate, **pH = 0.98** | AQ concentrate, **pH = 3.0** | **Combining** ORG and AQ **concentrate, pH = 1.8** |
| | **After JA310, pH = 7.9** | **After JA310, pH = 9.0** | |
| BPA | 98.3% | 91.7% | Not Applicable |
| Phe | Not Applicable | 92.8% | |
| DBU | 140% | 138.9% | |
| 4-1-L-PA | 56.1% | 97% | |
| **Second stage** | **After CRB05, pH = 0.7** | **After SK1B, pH = 9.1** | **After WK60L, pH = 1.8** |
| BPA | 92.3% | 96.2% | 90.7% |
| Phe | 16.7% | 63.6% | 91.2% |
| DBU | Not Detectable | 20.0% | 88% |
| 4-I-L-PA | 27.8% | Not Detectable | Not Applicable |

| **Third stage** | **After SP850** | **After SP850** | **After 'SP850** |
|---|---|---|---|
| BPA | 31.6% | 89.8% | 97% |
| Phe | 3.3% | 5.4% | Not Detectable |
| DBU | Not Detectable | 30.6% | Not Detectable |
| 4-I-L-PA | Not Detectable | Not Detectable | Not Detectable |

### Example 11 (RD202414-250411)

However, further trial surprisingly indicated that purification with just one column can produce better result than any one of the methods of purification shown in Example 10. Briefly, a purification column containing SEPABEADS^{™} SP850 Resin was prepared by filling a glass column with 100mL of SP850 resin and rinsing with purified water. An amount of 8.0g of 4-borono-L-phenylalanine-¹⁰B crude (RD202414-250404) was dissolved in 392.0g of 2% HCl solution. The 4-borono-L-phenylalanine-¹⁰B solution was then passed through the purification column containing SEPABEADS^{™} SP850 Resin, followed by washing with purified water. The flow rate is about 1 to 3 Bed / hour. The collection criteria were determined by UPLC, and 516.5 g of elute was collected in 1L glass bottle. 10% Na₂CO₃ was charged into the elute to adjusted the pH. The pH was adjusted to an isoelectric point to precipitate the desired product, then stirred for 16 hours at room temperature. Filter the resulting mixture to obtain 6.4g (yield 80.3%) of 4-borono-L-phenylalanine-¹⁰B as white solid, which was 99.7% pure determined by UPLC. ¹H NMR (600 MHz, D₂O, CF₃COOH): δ 7.68 (d. J=8.1 Hz, 2H), 7.28 (d. J=8.0 Hz, 2H), 4.29(dd, J=7.7, 5.8 Hz, 1H), 3.30 (dd, J=14.6, 5.7 Hz, 1H), 3.17 (dd, J=14.6, 7.7 Hz, 1H); MS (ESI): calculated for C₉H₁₃¹⁰BNO₄, [M+H]⁺ 209.09; found 209.56. Melting point: 275 to 280°C. (decomp.).

While some of the embodiments of the present disclosure have been described in detail above, it is, however, possible for those of ordinary skill in the art to make various modifications and changes to the particular embodiments shown without substantially departing from the teaching and advantages of the present disclosure. Such modifications and changes are encompassed in the scope of the present disclosure as set forth in the appended claims.

## Claims

1. A method for preparing 4-borono-L-phenylalanine comprising:
a) reacting 4-halo-phenylalanine with a Grignard reagent in the presence of an organic base to form a reaction mixture; and
b) reacting the reaction mixture obtained from step a) with a boronating agent.

2. The method for preparing 4-borono-L-phenylalanine of claim 1, wherein the halogen of 4-halo-phenylalanin is fluorine (F), chlorine (Cl), bromine (Br), or iodine (I).

3. The method for preparing 4-borono-L-phenylalanine of claim 1, wherein the Grignard reagent is a C₁-C₁₅ linear or branched alkylmagnesium halide.

4. The method for preparing 4-borono-L-phenylalanine of claim 3, wherein the C₁-C₁₅ linear or branched alkylmagnesium halide is isopropylmagnesium chloride, sec-butylmagnesium chloride, or trimethylsilylmethylmagnesium chloride.

5. The method for preparing 4-borono-L-phenylalanine of claim 1, wherein the Grignard reagent is further combined with a metal halide, preferably the metal halide is lithium chloride.

6. The method for preparing 4-borono-L-phenylalanine of claim 1, wherein the organic base is an amidine compound or a guanidine compound.

7. The method for preparing 4-borono-L-phenylalanine of claim 6, wherein the amidine compound is represented by formula (I): 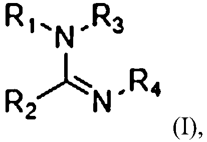
wherein each ofR₁ to R₄ is independently selected from the group consisting of H, a substituted or unsubstituted C₁-C₂₀ alkyl group, and a substituted or unsubstituted C₁-C₂₀ cycloalkyl group, or
any two of the R₁ to R₄ are not H and are linked to each other to form a substituted or unsubstituted ring,
preferably the amidine compound is 1,8-diazabicyclo[5.4.0]undec-7-ene, 1,5-diazabicyclo[4.3.0]non-5-ene, diminazene, benzamidine, pentamidine, paranyline, or any combination thereof.

8. The method for preparing 4-borono-L-phenylalanine of claim 6, wherein the guanidine compound is represented by formula (II): 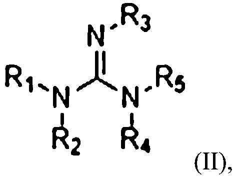
wherein each of R₁ to R₅ is independently selected from the group consisting of H, a substituted or unsubstituted C₁-C₂₀ alkyl group, and a substituted or unsubstituted C₁-C₂₀ cycloalkyl group, or
any two of the R₁ to R₅ are not H and are linked to each other to form a substituted or unsubstituted ring,
preferably the guanidine compound is 1,1,3,3-tetramethylguanidine, 2-tert-Butyl-1,1,3,3-tetramethylguanidine, 7-methyl-1,5,7-triazabicyclo[4.4.0]dec-5-ene, 1,5,7-triazabicyclo[4.4.0]dec-5-ene, or any combination thereof.

9. The method for preparing 4-borono-L-phenylalanine of claim 1, wherein the reaction in the step a) is performed at a temperature ranging from -30°C to 10°C.

10. The method for preparing 4-borono-L-phenylalanine of claim 1, wherein the reaction in the step a) is performed at a molar equivalent of the Grignard reagent to the 4-halo-phenylalanine is at least 4.0 and a molar equivalent of the organic base to the 4-halo-phenylalanine is at least 1.0.

11. The method for preparing 4-borono-L-phenylalanine of claim 1, wherein the boronating agent is a boric acid ester or a boric acid amide.

12. The method for preparing 4-borono-L-phenylalanine of claim 1, wherein the reaction in the step b) is performed at a temperature ranging from -50°C to 10°C.

13. The method for preparing 4-borono-L-phenylalanine of claim 1, wherein the reaction in the step b) is performed at a molar equivalent of the boronating agent to the 4-halo-phenylalanine is at least 0.9.

14. The method for preparing 4-borono-L-phenylalanine of claim 1, further comprising c) quenching the reaction of step b) with an acid solution.

15. A method for purifying 4-borono-L-phenylalanine, comprising purifying the 4-borono-L-phenylalanine obtained from any one of claims 1-14 using a reversed-phase column.
